# EUROPEAN PATENT SPECIFICATION

(11) **EP 3 594 832 B1**
(45) Date of publication and mention of the grant of the patent: **29.03.2023**
(21) Application number: 18785242.1
(22) Date of filing: 30.05.2018
(51) Int. Cl.: G06Q 10/00, G06Q 10/02, G06Q 10/06, G06Q 30/06, B60S 5/00, E04H 5/06

(54) **REPAIR SITE MANAGEMENT METHOD, SERVER, AND COMPUTER READABLE STORAGE MEDIUM**
VERFAHREN, SERVER ZUR VERWALTUNG VON WARTUNGSSTANDORTEN UND COMPUTERLESBARES SPEICHERMEDIUM
PROCÉDÉ DE GESTION DE SITE DE RÉPARATION, SERVEUR ET SUPPORT DE STOCKAGE LISIBLE PAR ORDINATEUR

(43) Date of publication of application: 15.01.2020
(73) Proprietor: Launch Tech Co., Ltd, Longgang District Shenzhen Guangdong 518129 (CN)
(72) Inventor: LIU, Jun, Shenzhen, Guangdong 518129 (CN); MAI, Xueying, Shenzhen, Guangdong 518129 (CN)
(74) Representative: Miller Sturt Kenyon
(86) International application number: PCT/CN2018/088952
(87) International publication number: WO 2019/227321

(56) References cited:
- CN-A- 107 220 719
- CN-A- 108 055 334
- CN-U- 205 721 928
- US-A1- 2003 120 509
- US-A1- 2012 092 191
- US-B1- 6 651 778
- Anonymous: "Appointment With Deposit - Stew's Self Service Garage", , 5 June 2016 (2016-06-05), XP055651647, Retrieved from the Internet: URL:https://web.archive.org/web/2016060501 2421/http://stewsgarage.com/make-an-appoin tment-2/ [retrieved on 2019-12-10]
- ANDREAS BOGNER ET AL: "A Decentralised Sharing App running a Smart Contract on the Ethereum Blockchain", THE INTERNET OF THINGS, ACM, 2 PENN PLAZA, SUITE 701 NEW YORK NY 10121-0701 USA, 7 November 2016 (2016-11-07), pages 177-178, XP058307244, DOI: 10.1145/2991561.2998465 ISBN: 978-1-4503-4814-0

## Description

### THCHNICAL FIELD

The present disclosure relates to a technical field of maintenance service, and more particularly, to a method, a server for maintenance sites management and a computer readable storage medium. The invention is set out in the appended set of claims.

### TECHNICAL BACKGROUND

In the prior art, users may reserve a maintenance site through a telephone or an application in the mobile phone, and a specially-assigned person is needed in the maintenance site to register and deal with the reservation information and the use of equipments, resulting in lots of human resources being consumed, thus the cost is relatively high. Meanwhile, the efficiency of manual register is low, resulting in relatively low service efficiency of the maintenance site.

D1 (XP055651647) discloses a website for appointing a bay with deposit to maintain a vehicle. In D1, a user can appoint bays with different maintenance functions provided in stew's self service garage through selecting a start time for maintenance and entering the user's contact information.

D2 (US 2012/092191 A1) discloses a computer-implemented system and method for tagging a parking space for a motor vehicle through a gesture. In D2, motor vehicle parking spaces are managed through a server, smart parking devices physically proximate to the parking spaces are interfaced, vehicle occupancy sensors also physically proximate the parking spaces are interfaced, and parking availability indicators associated with the parking spaces are interfaced. Those parking spaces that are unoccupied based on their respective vehicle occupancy sensors and currently available over any other reservations stored in the server are identified to a driver of a motor vehicle. One of the unoccupied parking spaces is reserved upon a gesture provided by the driver. Occupancy of the reserved unoccupied parking space is sensed through the nearest vehicle occupancy sensor following parking of the motor vehicle. The identity of the motorist is verified against the reservation through the nearest smart parking device.

D8 (US 2003/120509 A1) discloses a method for managing a rental equipment business that automatically determines damages to the rented equipment.

Therefore, it is a problem to be solved for persons skilled in the art how to improve the service efficiency of the maintenance site.

### SUMMARY

The present disclosure aims at providing a method, a server for maintenance sites management and a computer readable storage medium, such that to improve the service efficiency of the maintenance site.

In order to achieve the above purpose, a first aspect of the present disclosure provides a method for maintenance sites management comprising:
receiving reservation information sent by client terminal; wherein the reservation information comprises at least a target maintenance site and a target usage duration;
receiving check-in information during the target usage duration;
providing usage permission of the target maintenance site to the client terminal according to the check-in information;
wherein the method further comprises:
   receiving an end-of-use request submitted by the client terminal, and obtaining current status information of all equipments at the target maintenance site, wherein the current status information of all the equipments comprises at least one of: whether parameters values of all the equipments are within a normal threshold range, whether a user follows usage rules of the equipments, whether detachable parts of the equipments are returned to seats, whether movable parts of the equipments are at locations in their initial states, and whether an overall cleaning degree of the equipments conforms to a standard;
   determining that operating statuses of all the equipments are normal when the current status information of all the equipments is positive, otherwise determining that the operating status is not normal;
   generating a maintenance service list and a charge list according to the user' s usage process;
   generating an additional fee list based on a determination result whether the operating statuses of all the equipments are normal, wherein the additional fee list is zero if the operating statuses of all the equipments are normal, otherwise the additional fee list is compensation required to restore a damaged equipment to normal;
   initiating a request for a payment transaction, based on the service list, the charge list and the additional fee list, to the client terminal, such that the client terminal completes the payment transaction;
   sending checkout reminder information indicating that the user is allowed to check out to the client terminal, after the client terminal has completed the payment transaction;
   turning off the usage permission of the target maintenance site to the client terminal after receiving checkout information from the client terminal.

With reference to the first aspect of the present disclosure, and in a first possible implementation of the first aspect of the present disclosure, before receiving reservation information sent by the client terminal, the method further comprises:
receiving a reservation request submitted by the client terminal;
sending information on at least one maintenance site to the client terminal according to the reservation request, such that a user confirms the reservation information according to the information on at least one maintenance site.

With reference to the first aspect of the present disclosure, and in a second possible implementation of the first aspect of the present disclosure, after receiving reservation information sent by the client terminal, the method further comprises:
determining usage deposit of the target maintenance site according to the reservation information;
initiating a payment transaction request of the usage deposit to the client terminal, to enable the client terminal to complete a deposit payment transaction;
assigning a reservation usage qualification of the target maintenance site to the client terminal, after the client terminal completes the deposit payment transaction.
With reference to the first aspect of the present disclosure, and in a third possible implementation of the first aspect of the present disclosure, the reservation information further comprises a client terminal identity identifier or an identifier of an equipment for maintenance;
that providing usage permission of the target maintenance site to the client terminal according to the check-in information specifically comprises:
   determining whether the client terminal identity identifier in the check-in information is consistent with that in the reservation information, and/or determining whether the identifier of the equipment in the check-in information is consistent with the identifier of the equipment for maintenance in the reservation information;
   if consistent, providing the usage permission of the target maintenance site to the client terminal.

In order to achieve the above purpose, a second aspect of the present disclosure provides a server for maintenance sites management comprising:
a memory storing executable computer programs;
a processor coupled with the memory;
when used for executing the computer programs the processor implements steps of: receiving reservation information sent by client terminal; wherein the reservation information comprises at least a target maintenance site and a target usage duration; receiving check-in information during the target usage duration; providing usage permission of the target maintenance site to the client terminal according to the check-in information;
wherein, when executing the computer programs stored in the memory, the processor further implements steps of: receiving an end-of-use request submitted by the client terminal, and obtaining current status information of all equipments at the target maintenance site, wherein the current status information of all the equipments comprises at least one of: whether parameters values of all the equipments are within a normal threshold range, whether a user follows usage rules of the equipments, whether detachable parts of the equipments are returned to seats, whether movable parts of the equipments are at locations in their initial states, and whether an overall cleaning degree of the equipments conforms to a standard; determining that operating statuses of all the equipments are normal when the current status information of all the equipments is positive, otherwise determining that the operating status is not normal; generating a maintenance service list and a charge list according to the user' s usage process; generating an additional fee list based on a determination result whether the operating statuses of all the equipments are normal, wherein the additional fee list is zero if the operating statuses of all the equipments are normal, otherwise the additional fee list is compensation required to restore a damaged equipment to normal; initiating a request for a payment transaction, based on the service list, the charge list and the additional fee list, to the client terminal, such that the client terminal completes the payment transaction; sending checkout reminder information indicating that the user is allowed to check out to the client terminal, after the client terminal has completed the payment transaction; turning off the usage permission of the target maintenance site to the client terminal after receiving checkout information from the client terminal.

With reference to the second aspect of the present disclosure, in a first possible implementation of the second aspect of the present disclosure, when executing the computer programs stored in the memory the processor implements steps of: receiving a reservation request submitted by the client terminal; sending information on at least one maintenance site to the client terminal according to the reservation request such that a user confirms the reservation information according to the information on the at least one maintenance site.

With reference to the second aspect of the present disclosure, in a second possible implementation of the second aspect of the present disclosure, when executing the computer programs stored in the memory the processor implements steps of: determining usage deposit of the target maintenance site according to the reservation information;
initiating a payment transaction request of the usage deposit to the client terminal, to enable the client terminal to complete a deposit payment transaction;
assigning a reservation usage qualification of the target maintenance site to the client terminal after the client terminal completes the deposit payment transaction.

With reference to the second aspect of the present disclosure, in a third possible implementation of the second aspect of the present disclosure, when executing the computer programs stored in the memory the processor implements steps of: determining whether the client terminal identity identifier in the check-in information is consistent with that in the reservation information, and/or determining whether the identifier of the equipment in the check-in information is consistent with the identifier of the equipment for maintenance in the reservation information; if consistent, providing the usage permission of the target maintenance site to the client terminal.

In order to achieve the above purpose, a third aspect of the present disclosure provides a computer readable storage medium storing computer programs, and when executed by a processor the computer programs implement steps of the first aspect and any one of the possible implementations in the first aspect.

It can be seen through the above solutions that, the present disclosure provides a method for maintenance sites management comprising: receiving reservation information sent by client terminal; wherein the reservation information comprises at least a target maintenance site and a target usage duration; receiving check-in information during the target usage duration; providing usage permission of the target maintenance site to the client terminal according to the check-in information.

The method for maintenance sites management provided by the present disclosure, obtains the reservation information of the users through the client terminal, and the reservation information comprises at least the target maintenance site and the target usage duration. The users only need to complete the check-in operation on the client terminal during the target usage duration, and the target maintenance site can be used during the target usage duration. The maintenance sites do not need to be registered by a special person, which reduces the labor cost and improves the usage efficiency of the maintenance sites, further realizing the sharing of the maintenance sites. The present disclosure further discloses a server for maintenance sites management and a computer readable storage medium, which can also achieve the above technical effects.

### BRIEF DESCRIPTION OF THE DRAWINGS

In order to illustrate the embodiments of the present disclosure or the technical solutions in the prior art more clearly, the drawings to be used in the description of the embodiments or the prior art will be briefly described below.
FIG. 1 is a flow chart of one method for maintenance sites management disclosed by an embodiment of the present disclosure;
FIG. 2 is a flow chart of another method for maintenance sites management disclosed by an embodiment of the present disclosure;
FIG. 3 is a structural schematic view of one server for maintenance sites management disclosed by an embodiment of the present disclosure;
FIG. 4 is a structural schematic view of another server for maintenance sites management disclosed by an embodiment of the present disclosure.

### DETAILED DESCRIPTION

With reference to the figures in embodiments of the present disclosure, the technical solutions in embodiments of the present disclosure will be described clearly and completely below.

The method for maintenance sites management provided by the present disclosure, is applicable to the reservation of maintenance sites for vehicles or electrical equipments. The users may make reservation request to the server through the client terminal, and select the target maintenance site and the target usage duration according to the sites information returned from the server. The users only need to complete the check-in operation during the target usage duration, then obtain the usage permission for the target maintenance site. The maintenance sites do not need to be registered by a special person, which reduces the labor cost and improves the usage efficiency of the maintenance sites, further realizing the sharing of the maintenance sites.

An embodiment of the present disclosure discloses a method for maintenance sites management, which improves the usage efficiency of the maintenance sites.

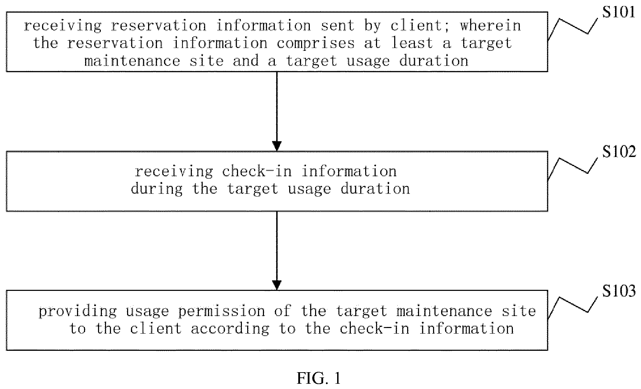

Referring to FIG. 1, a flow chart of a method for maintenance sites management, disclosed by an embodiment of the present disclosure shown as FIG. 1, comprising:
S101: receiving reservation information sent by client terminal; wherein the reservation information comprises at least a target maintenance site and a target usage duration.

In detailed implementation, the server collects the reservation information of the user through the client terminal, and the reservation information herein comprises at least target maintenance site and target usage duration, of course may further comprises information of reservation person and equipments to be maintain, which are all in the protection scope of the present embodiment. The user needs to fill in the above reservation information in the client terminal, as a preferred implementation, the user also needs to agree with the usage protocol for the target maintenance site, and the client terminal generates the reservation information based on the above information and sends it to the server. As a preferred implementation, in order to avoid arbitrary changes in the usage protocol of each maintenance site, the usage protocol corresponding to said maintenance site may be uploaded to a block chain for storage, which can ensure that the usage protocol is safe and is not able to tampered taking advantage of the decentralized and non-tampered features of the block chain.

It should be noted that, steps of receiving the reservation request submitted by the client terminal may be comprised before step 101. Specifically, the user sends reservation request to the server through the client terminal, to obtain information on at least one maintenance site, of course the server may send information with all maintenance sites to the user, such that the user makes selection according to the maintenance sites information obtained.

As a preferred implementation, the above reservation request may comprise the user's current location information and the failure information of the equipments to be repaired. The server selects a satisfied candidate maintenance sites based on the failure information, and sends the site information of the candidate maintenance sites to the client terminal, herein the site information includes at least available time period of the candidate maintenance sites, and may also include charge standard of the candidate maintenance sites.

Surely, the site information of the candidate maintenance sites may be ranked depending on a predefined rules before sending, for example, ranking depending on the distances between the candidate maintenance sites and the current location or the like.

As a more preferred implementation, the user may limit conditions of the candidate maintenance sites during reservation request, for example, the user may select a charging range of the maintenance sites, a distance range from the current location or the like, the client terminal will package these limited conditions in the reservation request and send it to the server, such that the server selects the candidate maintenance sites meeting the limited conditions.

It should be appreciated that, to ensure the user's civilized use of the maintenance sites and the normal operation of each maintenance site, as a preferred embodiment, a means of charging a deposit may be adopted.

Specifically, after the server has received the reservation information sent by the client terminal, determining the usage deposit of the target maintenance site and initiating the payment transaction request of the usage deposit to the client terminal, and after the deposit payment transaction has been finished in the client terminal, assigning the reservation usage qualification of the target maintenance site to said client terminal. The user may use common payment means, such as network bank payment, third-party payment etc., to complete the deposit payment transaction in the client terminal, and it is not limited specifically herein. As a preferred implementation, the above deposit payment transaction may be uploaded to the block chain for storage, that is to say, the server uploads the deposit payment transaction to the block chain through a block chain node, so that other nodes of the block chain synchronize the deposit payment transaction, and the security of the deposit payment transaction is ensured taking advantage of the decentralized and non-tamperable features of the block chain.

In above embodiments, corresponding relationships between the various maintenance sites and usage deposits are stored in the database of the default server. The corresponding relationships may be stored in the database in a form of data table, and may be stored in other forms, which is not specifically limited herein. It should be appreciated that, the usage deposits corresponding to various maintenance sites may be same or different, and may be set flexibly by those skilled in the art according to practical situations.

As for refund of the deposit, the user may either send a request of refunding deposit to the server though the client terminal after using the maintenance site once, or send a request of refunding deposit to the server after using multiple times. After receiving the request of refunding deposit, the server queries the deposit amount of the user and returns the deposit according to the payment path of the user.

S102: receiving check-in information during the target usage duration;

S103: providing usage permission of the target maintenance site to the client terminal according to the check-in information.

In specific embodiment, after receiving the check-in information from the client terminal during the target usage duration, the server controls the target maintenance site to open, and enables various maintenance equipments inside the target maintenance site be at a serviceable condition. It should be appreciated that, when the server does not receive the check-in information from the client terminal during the target usage duration, the server may charge the user corresponding liquidated damage. The user may enjoy the next service only after the liquidated damage is paid, of course the user may deduct partial deposit according to preset rules, and the specific charging method is not specifically limited herein.

It should be noted that, the user may complete the check-in operation through the client terminal identity identifier and/or the identifier of the equipment to be repaired, and obtain the usage permission of the maintenance site. That is to say, the check-in information and the reservation information both comprise the client terminal identity identifier and/or the identifier of the equipment to be repaired, and the server will provide the usage permission of the maintenance site to the user after determining the identifiers in the check-in information and the reservation information having conformity. Specifically, when the reservation information includes information of the reservation person, i.e., the client terminal identity identifier, the user scans the identifier information such as a two-dimensional code of the target maintenance site through the client terminal to perform the check-in operation, the client terminal packages its identifier in the check-in information and sends it to the server, and the server compares whether the identifier within the check-in operation and the identifier within the reservation information are consistent, if consistent, controls the target maintenance site being provided, otherwise, sends an unscheduled prompt to the user through the client terminal. When the reservation information includes the equipment to be repaired, the identity identifier of the equipment is captured by an image collector inside the target maintenance site, and the server compares whether said identity identifier and the identity identifier of the equipment to be repaired in the reservation information are consistent, and if consistent, controls the target maintenance site being provided, otherwise, sends a prompt that said equipment is not unscheduled to the user through the client terminal. In some specific application scenarios, that the server controls the target maintenance site being open, may be controlling the access control of the maintenance site for the user to enter the maintenance site, or may be that the server sends the access password to the user's client terminal, and the user uses the access password to open the access control and enter the maintenance site. It is not limited by the present disclosure herein.

The method for maintenance sites management provided by the embodiments of the present disclosure, obtains the reservation information of the users through the client terminal, and the reservation information comprises at least the target maintenance site and the target usage duration. The users only need to complete the check-in operation on the client terminal during the target usage duration, the target maintenance site can be used during the target usage duration. The maintenance sites do not need to be registered by a special person, which reduces the labor cost and improves the usage efficiency of the maintenance sites, further realizing the sharing of the maintenance sites.

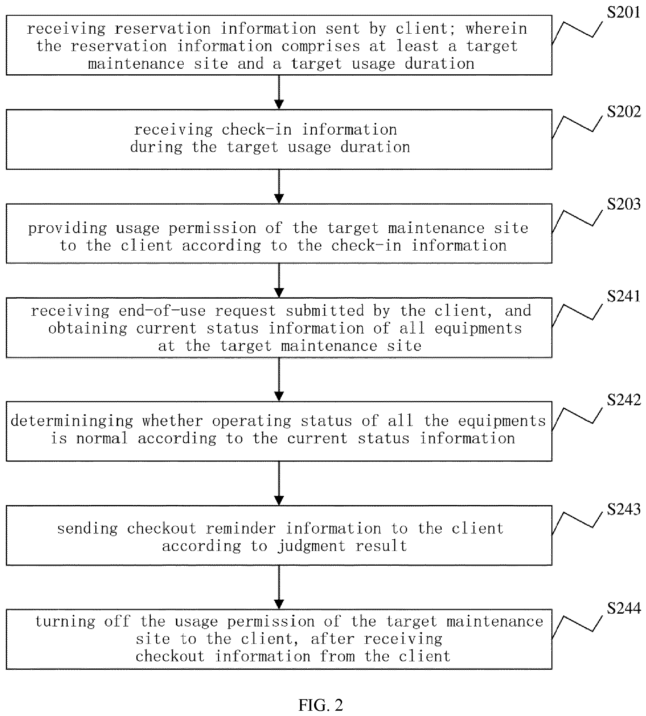

An embodiment of the present disclosure discloses a method for maintenance sites management, and this embodiment further describes and optimizes the technical solution with respect to the above embodiment. Specifically:
referring to FIG. 2, a flow chart of another method for maintenance sites management provided by the present embodiment of the disclosure, shown as FIG. 2, comprises;
S201: receiving reservation information sent by client terminal; wherein the reservation information comprises at least a target maintenance site and a target usage duration;
S202: receiving check-in information during the target usage duration;
S203: providing usage permission of the target maintenance site to the client terminal according to the check-in information;
S241: receiving end-of-use request submitted by the client terminal, and obtaining current status information of all equipments at the target maintenance site;
it should be appreciated that the maintenance sites may provide shared service for the users free of charge, or may require the users pay for the service. When the user needs payment, the server generates the maintenance service list and the charge list according to user's usage process after receiving the end-of-use request submitted by the client terminal, initiates a payment transaction request based on the maintenance service list and the charge list to the client terminal, and sends the checkout reminder information to the client terminal after the client terminal has completed the payment transaction. The corresponding relationships between the various maintenance sites and charge standards are stored in the database of the default server herein, in a similar way, the corresponding relationships may be stored in the database in a form of data table, and may be stored in other forms, and the usage costs corresponding to the various maintenance sites may be same or different, which is not specifically limited herein.

It should be appreciated that, the user may be prompted to time out at a preset time before the end of the target usage duration in order to improve the user experience, and the specific value of the preset time is not limited here. When the target usage duration ends, the usage permission of the target maintenance site is closed. Of course, as a preferred implementation, when the time that the user uses the scheduled maintenance site exceeds the reserved time period, the usage cost out of time may be counted into the above charge list.

S242: determining whether operating status of all the equipments are normal according to the current status information;
in specific implementation, the user sends the end-of use request to the server by the client terminal after finishing using the target maintenance site, and the server collects the current status information of all the equipments inside the target maintenance site, and judges whether the operating status of the equipments is normal. For example, the operation state of the equipments may be monitored by running a monitor, the parameters values of the equipments may be collected by a voltage collector, a current collector, etc., and it is determined whether the parameters values are within a normal threshold range. For example again, it may be determined whether the user has followed the usage rules of the equipments by a camera or an infrared device, whether detachable parts of the equipments has returned to seats, whether movable parts of the equipments are at locations in their initial states (i.e., states before the user uses), and whether the overall cleaning degree of the equipments conforms to the standard, and the like. If any of the above determination results is positive, the operating status of this equipment is determined to be normal, vise verse. According to the above determination results, an additional fee list is generated. That is to say, when the operating state is normal, the additional fee list is zero, and when the operating state is abnormal, the additional fee list is the compensation required to restore the damaged equipments to normal, and the user may check out only after having paid the additional cost.

As a preferred implementation, the storage method is the same with the above deposit payment transaction, the payment transaction of the usage costs and the additional costs may be uploaded to the block chain for storage, and the security of the deposit payment transaction of the usage costs and the additional costs is ensured taking advantage of the decentralized and non-tamperable features of the block chain.

S243: sending checkout reminder information to the client terminal according to the determination result;
in specific implementation, after the user has finished the transaction of all costs through the client terminal, the user is allowed to check out, i.e., the checkout reminder information is sent to the client terminal, the user may check out through the client terminal, and the client terminal sends the checkout information to the server.

As a preferred implementation, the server may send the service list and the charge list to the client terminal first, and the user is allowed to check out after confirming. The server initiates the payments transaction based on the above service list and charge list to the client terminal after receiving the checkout information from the client terminal, and the user may implement the next reservation operation only after having paid the usage costs.

S244: turning off the usage permission of the target maintenance site to the client terminal, after receiving checkout information from the client terminal.

In specific implementation, the server closes the usage permission of the target maintenance site for the client terminal after receiving the checkout information from the client terminal, i.e., the target maintenance site is at a non-available status and all the equipments inside the target maintenance site are at non-available status, and the user has no access to turn on all the above equipments.

The following introduces implementations when the maintenance sites management, provided by the above embodiments, is applied to vehicle maintenance. Specifically:
if the user's vehicle tire is broken down, the tire fault and the current location can be sent to the server as a reservation request through the mobile phone application, the server screens the vehicle maintenance sites where the tire equipments are at available status, and the available service periods of the maintenance sites meeting requirement are sent to the mobile terminal, further the user selects the maintenance site and the usage period to submit. The server initiates a payment transaction to the application according to the usage deposit corresponding to the maintenance site. After completing the payment transaction, the user can complete the check-in operation by scanning the QR code of the maintenance site through the mobile phone during the selected usage period, and the user can use all equipments inside the maintenance site during the usage period. After the usage is completed, the checkout operation is performed in the application, the server generates the maintenance service list and the charge list, and generates the additional charge list sent to the application together with the above service list and the charge list, according to whether the operation status of various maintenance equipments inside the maintenance site is normal. The user can only make a reservation for the next maintenance site after completing all the costs payment operations. The user may apply for refund deposit after using the maintenance site once and finishing payment transaction, or apply for refund deposit after multiple usages, and then obtain the deposit.

The following introduces implementations when the maintenance sites management, provided by the above embodiments, is applied to electrical equipments maintenance. Specifically:
if the user's electrical equipment is broken down, the current location can be sent to the server as a reservation information through the mobile phone application, the server sends the electrical equipments maintenance sites at available status currently to the application of the mobile terminal according to the distances, from near to far, from the current location, further the user selects the maintenance site and the usage period to submit. The server initiates a payment transaction to the application according to the usage deposit corresponding to the maintenance site. After completing the payment transaction, the user may complete the check-in operation by scanning the QR code of the broken electrical equipment by the scanner in the maintenance site during the selected usage period, and may use all equipments inside the maintenance site during the usage period. After the usage is completed, the checkout operation is performed in the application, the server generates the maintenance service list and the charge list, and generates the additional charge list sent to the application together according to the current status of all equipments. The user can only make a reservation for the next maintenance site after completing all the payment operations. The user may apply for refund deposit after using the maintenance site once and finishing payment transaction, or apply for refund deposit after multiple usages, and then obtain the deposit.

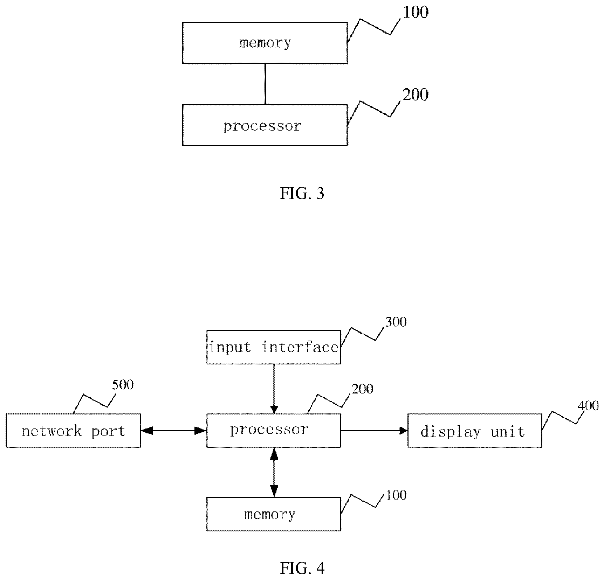

The present disclosure also provides a server for maintenance sites management. Referring to FIG. 3, a structural schematic view of a server for maintenance sites management disclosed by an embodiment of the present disclosure, shown as FIG. 3, comprises:
a memory 100 storing executable computer programs;
a processor 200 coupled with the memory;
specifically, the memory 100 comprises a nonvolatile storage medium, an internal memory. The nonvolatile storage medium is stored with operation system and computer readable instructions, the internal memory provides environment for running of the operation system and the computer readable instructions in the nonvolatile storage medium. The processor 200 provides computing and controlling capacities for the maintenance site management server, when executing the computer programs stored in the memory 100 the processor may implement steps of: receiving reservation information sent by client terminal; wherein the reservation information comprises at least a target maintenance site and a target usage duration; receiving check-in information during the target usage duration; providing usage permission of the target maintenance site to the client terminal according to the check-in information.

The server for maintenance sites management provided by the embodiment of the present disclosure, obtains the reservation information of the users through the client terminal, and the reservation information comprises at least the target maintenance site and the target usage duration. The users only need to complete the check-in operation on the client terminal during the target usage duration, the target maintenance site can be used during the target usage duration. The maintenance sites do not need to be registered by a special person, which reduces the labor cost and improves the usage efficiency of the maintenance sites, further realizing the sharing of the maintenance sites.

Preferably, when executing the computer programs stored in the memory 100, the processor 200 may implements the following step of: sending information on at least one maintenance site to the client terminal according to the reservation request, such that a user confirms the reservation information according to the information on at least one maintenance site.

Preferably, when executing the computer programs stored in the memory 100, the processor 200 may implement the following steps of: determining usage deposit of the target maintenance site according to the reservation information; initiating a payment transaction request of the usage deposit to the client terminal, to enable the client terminal to complete a deposit payment transaction; assigning a reservation usage qualification of the target maintenance site to the client terminal after the client terminal completes the deposit payment transaction.

Preferably, when executing the computer programs stored in the memory 100, the processor 200 may implement the following steps of: determining whether the client terminal identity identifier in the check-in information is consistent with that in the reservation information, and/or determining whether the identifier of the equipment in the check-in information is consistent with the identifier of the equipment for maintenance in the reservation information; if consistent, providing usage permission of the target maintenance site to the client terminal.

Preferably, when executing the computer programs stored in the memory 100, the processor 200 may implement the following steps of: receiving end-of-use request submitted by the client terminal, and obtaining current status information of all equipments at the target maintenance site; determining whether operating status of all the equipments are normal according to the current status information; sending a checkout reminder information to the client terminal according to determination result; turning off the usage permission of the target maintenance site to the client terminal after receiving a checkout information from the client terminal.

Preferably, when executing the computer programs stored in the memory 100, the processor 200 may implement the following steps of: generating a maintenance service list and a charge list according to user's usage process; generating an additional fee list based on the determination result; initiating a payment transaction request, based on the service list, the charge list and the additional fee list, to the client terminal, such that the client terminal completes the payment transaction; sending the checkout reminder information to the client terminal, after the client terminal has completed the payment transaction.

On basis of the above embodiments, the server for maintenance sites management, as a preferred implementation referring to FIG. 4, further comprises:
an input interface 300, connected with the processor 200 for acquiring externally imported computer programs, parameters and instructions which are then stored in the memory 100 through the control of the processor200. The input interface 300 may be connected with an input device to receive the parameters or instructions manually input. The input device may be a touch layer covered on the display screen, and may be a button, trackball or touch pad arranged on the terminal housing, and may be a keyboard, touch pad or mouse or the like. Specifically, in the present embodiment, the sites information, of various maintenance sites or the like, is input through the input interface 300.
a display unit 400, connected with the processor 200 for displaying data sent by the processor 200. The display unit 400 may be a display screen on a PC, a crystal display screen or an e-ink display screen or the like. Specifically, in the present embodiment, the display 400 may display the current status information of various equipments in the maintenance site, the reservation information of users and the consumption information of various client terminals or the like.
a network port 500, connected with the processor 200 for communication connection with external various terminal equipments. The communication technology used in the communication connection may be wired communication technology or wireless communication technology, such as mobile high-definition link technology (MHL), universal serial bus (USB), high-definition multimedia interface (HDMI), wireless fidelity technology (WiFi), bluetooth communication technology, low-power bluetooth communication technology, communication technologies based on IEEE802.11s, etc. Specifically, in the present embodiment, the network port 500 may be used to import the enclosures, such as the corresponding relationships among the various maintenance sites, the charge standards and the usage deposits etc., to the processor 200.

The present disclosure further provides a computer readable medium storage, and the medium storage may comprises: various mediums able to store program codes such as a USB flash disk, a removable hard disk, a read-only memory (Read-Only Memory, ROM), a random access memory (Random Access Memory, RAM), a magnetic disk, or an optical disk etc. The storage medium is stored with computer programs, and when executed by the processor, the computer programs implement the following steps of: receiving reservation information sent by client terminal; wherein the reservation information comprises at least a target maintenance site and a target usage duration; receiving check-in information during the target usage duration; providing usage permission of the target maintenance site to the client terminal according to the check-in information.

The embodiment of the present disclosure obtains the reservation information of the users through the client terminal, and the reservation information comprises at least the target maintenance site and the target usage duration. The users only need to complete the check-in operation on the client terminal during the target usage duration, the target maintenance site can be used during the target usage duration. The maintenance sites do not need to be registered by a special person, which reduces the labor cost and improves the usage efficiency of the maintenance sites, further realizing the sharing of the maintenance sites.

Preferably, when executed by the processor, the computer subprograms stored in the computer readable storage medium may specifically implement the following steps of: sending information on at least one maintenance site to the client terminal according to the reservation request, such that a user confirms the reservation information according to the information on at least one maintenance site.

Preferably, when executed by the processor, the computer subprograms stored in the computer readable storage medium may specifically implement the following steps of: determining usage deposit of the target maintenance site according to the reservation information; initiating a payment transaction request of the usage deposit to the client terminal, to enable the client terminal to complete a deposit payment transaction; assigning a reservation usage qualification of the target maintenance site to the client terminal after the client terminal completes the deposit payment transaction.

Preferably, when executed by the processor, the computer subprograms stored in the computer readable storage medium may specifically implement the following steps of: determining whether the client terminal identity identifier in the check-in information is consistent with that in the reservation information, and/or determining whether the identifier of the equipment in the check-in information is consistent with the identifier of the equipment for maintenance in the reservation information; if consistent, providing usage permission of the target maintenance site to the client terminal.

Preferably, when executed by the processor, the computer subprograms stored in the computer readable storage medium may specifically implement the following steps of: receiving end-of-use request submitted by the client terminal, and obtaining current status information of all equipments at the target maintenance site; determining whether operating status of all the equipments are normal according to the current status information; sending a checkout reminder information to the client terminal according to determination result; turning off the usage permission of the target maintenance site to the client terminal after receiving a checkout information from the client terminal.

Preferably, when executed by the processor, the computer subprograms stored in the computer readable storage medium may specifically implement the following steps of: generating a maintenance service list and a charge list according to user's usage process; generating an additional fee list based on the determination result; initiating a payment transaction request, based on the service list, the charge list and the additional fee list, to the client terminal, such that the client terminal completes the payment transaction; sending the checkout reminder information to the client terminal, after the client terminal has completed the payment transaction.

The various embodiments in the present description are described in a progressive manner, each embodiment focuses on differences from other embodiments, and the same or similar parts among the various embodiments may be referred to each other.

The above description of the disclosed embodiments enables those skilled in the art to implement or use the disclosure. Various modifications to these embodiments are obvious to those skilled in the art, and the general principles defined herein may be implemented in other embodiments without departing from the scope of the disclosure. Therefore, the present disclosure is not limited to the embodiments shown herein, but the broadest scope consistent with the principles and novel features disclosed herein.

The various embodiments in the present description are described in a progressive manner, each embodiment focuses on differences from other embodiments, and the same or similar parts among the various embodiments may be referred to each other. As for the system disclosed in the embodiments, since it corresponds to the method disclosed in the embodiments, the description is relatively simple, and the relevant sections can refer to the description of method sections. It should be noted that those skilled in the art can make various improvements and modifications to the present disclosure without departing from the principles of the present disclosure, and these improvements and modifications are also within the scope of the claims of the present disclosure.

It should also be noted that in the present description, relational terms, such as first and second or the like, are used merely to distinguish one entity or operation from another entity or operation, and do not necessarily require or imply that there is any such actual relationship or order between these entities or operations. Furthermore, the term "comprise", "include" or any other variants that are intended to encompass a non-exclusive inclusion, such that a process, method, article, or device that comprises a plurality of elements includes not only those elements, but also other elements not listed specifically, or elements that are inherent to such a process, method, article, or device. Without more restriction, an element that is defined by the phrase "comprising a ..." does not exclude the presence of additional equivalent elements in the process, method, article, or device that comprises said element.

## Claims

1. A computer-implemented method for maintenance sites management comprising the following steps:
receiving reservation information sent by a client terminal; wherein the reservation information comprises at least a target maintenance site and a target usage duration;
receiving check-in information during the target usage duration;
providing usage permission of the target maintenance site to the client terminal according to the check-in information;
wherein the method further comprises:
receiving an end-of-use request submitted by the client terminal, and obtaining current status information of all equipments at the target maintenance site, wherein the current status information of all the equipments comprises at least one of: whether parameters values of all the equipments are within a normal threshold range, whether a user has followed usage rules of the equipments, whether detachable parts of the equipments are returned to seats, whether movable parts of the equipments are at locations in their initial states, and whether an overall cleaning degree of the equipments conforms to a standard;
determining that operating status of all the equipments is normal when the current status information of all the equipments is positive, otherwise determining that the operating status is not normal;
generating a maintenance service list and a charge list according to user's usage process: generating an additional fee list based on the determination result whether the operating status of all the equipments is normal, wherein the additional fee list is zero if the operating status of all the equipments is normal, otherwise the additional fee list is compensation required to restore a damaged equipment to normal;
initiating a request for a payment transaction, based on the service list, the charge list and the additional fee list, to the client terminal, such that the client terminal completes the payment transaction;
sending checkout reminder information indicating that the user is allowed to check out to the client terminal, after the client terminal has completed the payment transaction;
turning off the usage permission of the target maintenance site to the client terminal after receiving checkout information from the client terminal.

2. A method for maintenance sites management of claim 1, wherein, before the step of receiving reservation information sent by the client terminal, the method further comprises:
receiving a reservation request submitted by the client terminal;
sending information on at least one maintenance site to the client terminal according to the reservation request, such that a user confirms the reservation information according to the information on at least one maintenance site.

3. A method for maintenance sites management of claim 1, wherein, after the step of receiving reservation information sent by the client terminal, the method further comprises:
determining usage deposit of the target maintenance site according to the reservation information;
initiating a payment transaction request of the usage deposit to the client terminal, to enable the client terminal to complete a deposit payment transaction;
assigning a reservation usage qualification of the target maintenance site to the client terminal, after the client terminal completes the deposit payment transaction.

4. A method for maintenance sites management of claim 1, wherein, the reservation information further comprises a client terminal identity identifier or an identifier of an equipment to be repaired;
the step of providing usage permission of the target maintenance site to the client terminal according to the check-in information, specifically comprises:
determining whether the client terminal identity identifier in the check-in information is consistent with the client terminal identity identifier in the reservation information, and/or determining whether the identifier of the equipment in the check-in information is consistent with the identifier of the equipment for maintenance in the reservation information;
if consistent, providing the usage permission of the target maintenance site to the client terminal.

5. A server for maintenance sites management, **characterized in that**, the server comprises:
a memory (100) storing executable computer programs;
a processor (200) coupled with the memory (100);
when used for executing the computer programs, the processor (200) implements steps of: receiving reservation information sent by a client terminal; wherein the reservation information comprises at least a target maintenance site and a target usage duration; receiving check-in information during the target usage duration; providing usage permission of the target maintenance site to the client terminal according to the check-in information;
wherein, when executing the computer programs stored in the memory (100), the processor (200) further implements steps of: receiving an end-of-use request submitted by the client terminal, and obtaining current status information of all equipments at the target maintenance site, wherein the current status information of all the equipments comprises at least one of: whether parameters values of all the equipments are within a normal threshold range, whether a user has followed usage rules of the equipments, whether detachable parts of the equipments are returned to seats, whether movable parts of the equipments are at locations in their initial states, and whether an overall cleaning degree of the equipments conforms to a standard; determining that operating status of all the equipments is normal when the current status information of all the equipments is positive, otherwise determining that the operating status is not normal; generating a maintenance service list and a charge list according to user's usage process; generating an additional fee list based on the determination result whether the operating status of all the equipments is normal, wherein the additional fee list is zero if the operating status of all the equipments is normal, otherwise the additional fee list is compensation required to restore a damaged equipment to normal; initiating a request for a payment transaction, based on the service list, the charge list and the additional fee list, to the client terminal, such that the client terminal completes the payment transaction; sending checkout reminder information indicating that the user is allowed to check out to the client terminal, after the client terminal has completed the payment transaction; turning off the usage permission of the target maintenance site to the client terminal after receiving checkout information from the client terminal.

6. A server for maintenance sites management of claim 6, wherein, when executing the computer programs stored in the memory (100), the processor (200) implements steps of: receiving a reservation request submitted by the client terminal; sending information on at least one maintenance site to the client terminal according to the reservation request such that a user confirms the reservation information according to the information on the at least one maintenance site.

7. A server for maintenance sites management of claim 6, wherein, when executing the computer programs stored in the memory (100), the processor (200) implements steps of: determining usage deposit of the target maintenance site according to the reservation information; initiating a payment transaction request of the usage deposit to the client terminal, to enable the client terminal to complete a deposit payment transaction; assigning a reservation usage qualification of the target maintenance site to the client terminal after the client terminal completes the deposit payment transaction.

8. A server for maintenance sites management of claim 6, wherein, when executing the computer programs stored in the memory (100), the processor (200) implements steps of: determining whether the client terminal identity identifier in the check-in information is consistent with that in the reservation information, and/or determining whether the identifier of the equipment in the check-in information is consistent with the identifier of the equipment for maintenance in the reservation information; if consistent, providing usage permission of the target maintenance site to the client terminal.

9. A computer readable storage medium, wherein the computer readable storage medium is stored with computer programs, **characterized in that**, when executed by a processor the computer programs cause the processor to implement the steps of the method for maintenance sites management of any one of claims 1-4.

## Patentansprüche

1. Computerimplementiertes Verfahren zur Verwaltung von Wartungsstandorten, das die folgenden Schritte umfasst:
Empfangen von Reservierungsinformationen, die von einem Client-Endgerät gesendet werden, wobei die Reservierungsinformationen mindestens einen Ziel-Wartungsstandort und eine Ziel-Nutzungsdauer umfassen;
Empfangen von Eincheck-Informationen während der Ziel-Nutzungsdauer;
Bereitstellen der Nutzungserlaubnis für den Ziel-Wartungsstandort an das Client-Endgerät gemäß den Eincheck-Informationen;
wobei das Verfahren ferner umfasst:
Empfangen einer Nutzungsende-Anforderung, die durch das Client-Endgerät vorgelegt wird, und Erhalten von aktuellen Statusinformationen aller Ausrüstungen am Ziel-Wartungsstandort, wobei die aktuellen Statusinformationen aller Ausrüstungen mindestens eines der folgenden umfasst: ob die Parameterwerte aller Ausrüstungen innerhalb eines normalen Schwellenbereichs liegen, ob ein Benutzer die Nutzungsregeln der Ausrüstungen befolgt hat, ob abnehmbare Teile der Ausrüstungen zu den Sitzen zurückgebracht wurden, ob sich bewegliche Teile der Ausrüstungen an Positionen in ihren Ausgangszuständen befinden, und ob ein Gesamtreinigungsgrad der Ausrüstungen einem Standard entspricht;
Bestimmen, dass der Betriebsstatus aller Ausrüstungen normal ist, wenn die aktuellen Statusinformationen aller Ausrüstungen positiv sind, ansonsten Bestimmen, dass der Betriebsstatus nicht normal ist;
Erzeugen einer Wartungsdienstliste und einer Belastungsliste gemäß dem Nutzungsprozess des Benutzers; Erzeugen einer zusätzlichen Gebührenliste basierend auf dem Bestimmungsergebnis, ob der Betriebsstatus aller Ausrüstungen normal ist, wobei die zusätzliche Gebührenliste Null ist, wenn der Betriebsstatus aller Ausrüstungen normal ist, andernfalls ist die zusätzliche Gebührenliste eine Entschädigung, die erforderlich ist, um eine beschädigte Ausrüstung in den Normalzustand zu versetzen;
Auslösen einer Anforderung für eine Zahlungstransaktion, basierend auf der Dienstliste, der Belastungsliste und der zusätzlichen Gebührenliste, an das Client-Endgerät, so dass das Client-Endgerät die Zahlungstransaktion vollzieht;
Senden von Auscheck-Erinnerungsinformationen, die angeben, dass der Benutzer an das Client-Endgerät auschecken darf, nachdem das Client-Endgerät den Zahlungsvorgang vollzogen hat;
Ausschalten der Nutzungserlaubnis des Ziel-Wartungsstandorts an das Client-Endgerät nach dem Empfangen von Auscheck-Informationen von dem Client-Endgerät.

2. Verfahren zur Verwaltung von Wartungsstandorten nach Anspruch 1, wobei das Verfahren vor dem Schritt des Empfangens der vom Client-Endgerät gesendeten Reservierungsinformationen ferner umfasst:
Empfangen einer durch das Client-Endgerät vorgelegten Reservierungsanforderung;
Senden von Informationen über mindestens einen Wartungsstandort an das Client-Endgerät gemäß der Reservierungsanforderung, so dass ein Benutzer die Reservierungsinformationen gemäß den Informationen über mindestens einen Wartungsstandort bestätigt.

3. Verfahren zur Verwaltung von Wartungsstandorten nach Anspruch 1, wobei das Verfahren nach dem Schritt des Empfangens von durch das Client-Endgerät gesendeten Reservierungsinformationen ferner umfasst:
Bestimmen einer Nutzungsanzahlung für den Ziel-Wartungsstandort gemäß den Reservierungsinformationen;
Auslösen einer Anforderung für eine Zahlungstransaktion der Nutzungsanzahlung an das Client-Endgerät, um dem Client-Endgerät zu ermöglichen, eine Anzahlungstransaktion zu vollziehen;
Zuweisen einer Reservierungsnutzungsqualifikation des Ziel-Wartungsstandorts an das Client-Endgerät, nachdem das Client-Endgerät die Anzahlungstransaktion vollzieht.

4. Verfahren zur Verwaltung von Wartungsstandorten nach Anspruch 1, wobei die Reservierungsinformationen ferner einen Identitätsidentifikator des Client-Endgeräts oder einen Identifikator einer zu reparierenden Ausrüstung umfassen;
der Schritt des Bereitstellens einer Nutzungserlaubnis für den Ziel-Wartungsstandort an das Client-Endgerät gemäß den Eincheck-Informationen, insbesondere umfasst:
Bestimmen, ob der Identitätsidentifikator des Client-Endgeräts in den Eincheck-Informationen mit dem Identitätsidentifikator des Client-Endgeräts in den Reservierungsinformationen übereinstimmt, und/oder Bestimmen, ob der Identifikator der Ausrüstung in den Eincheck-Informationen mit dem Identifikator der Ausrüstung zur Wartung in den Reservierungsinformationen übereinstimmt;
wenn sie übereinstimmen, Bereitstellen der Nutzungserlaubnis für den Ziel-Wartungsstandort an das Client-Endgerät.

5. Server für die Verwaltung von Wartungsstandorten, **dadurch gekennzeichnet, dass** der Server umfasst:
einem Speicher (100), der ausführbare Computerprogramme speichert;
einen mit dem Speicher (100) gekoppelten Prozessor (200); wenn er zum Ausführen der Computerprogramme verwendet wird, implementiert der Prozessor (200) die folgenden Schritte:
Empfangen von Reservierungsinformationen, die durch ein Client-Endgerät gesendet werden; wobei die Reservierungsinformationen mindestens einen Ziel-Wartungsstandort und eine Ziel-Nutzungsdauer umfassen;
Empfangen von Eincheck-Informationen während der Ziel-Nutzungsdauer; Bereitstellen einer Nutzungserlaubnis für den Ziel-Wartungsstandort an das Client-Endgerät gemäß den Eincheck-Informationen;
wobei der Prozessor (200) beim Ausführen der in dem Speicher (100) gespeicherten Computerprogramme ferner die folgenden Schritte ausführt: Empfangen einer Nutzungsende-Anforderung, die durch das Client-Endgerät vorgelegt wurde, und Erhalten von aktuellen Statusinformationen aller Ausrüstungen an dem Ziel-Wartungsstandort, wobei die aktuellen Statusinformationen aller Ausrüstungen mindestens eines der folgenden umfassen: ob die Parameterwerte aller Ausrüstungen innerhalb eines normalen Schwellenbereichs liegen, ob ein Benutzer die Nutzungsregeln der Ausrüstungen befolgt hat, ob abnehmbare Teile der Ausrüstungen zu den Sitzen zurückgebracht wurden, ob bewegliche Teile der Ausrüstungen sich an Positionen in ihren Ausgangszuständen befinden, und ob ein Gesamtreinigungsgrad der Ausrüstungen einem Standard entspricht; Bestimmen, dass der Betriebsstatus aller Ausrüstungen normal ist, wenn die aktuellen Statusinformationen aller Ausrüstungen positiv sind, andernfalls Bestimmen, dass der Betriebsstatus nicht normal ist; Erzeugen einer Wartungsdienstliste und einer Belastungsliste gemäß dem Benutzungsprozess des Benutzers; Erzeugen einer zusätzlichen Gebührenliste basierend auf dem Bestimmungsergebnis, ob der Betriebsstatus aller Ausrüstungen normal ist, wobei die zusätzliche Gebührenliste Null ist, wenn der Betriebsstatus aller Ausrüstungen normal ist, andernfalls ist die zusätzliche Gebührenliste eine Entschädigung, die erforderlich ist, um eine beschädigte Ausrüstung in den Normalzustand zu versetzen; Auslösen einer Anforderung für eine Zahlungstransaktion, basierend auf der Dienstliste, der Belastungsliste und der zusätzlichen Gebührenliste, an das Client-Endgerät, so dass das Client-Endgerät die Zahlungstransaktion vollzieht; Senden von Auscheck-Erinnerungsinformationen, die angeben, dass der Benutzer auschecken darf, an das Client-Endgerät, nachdem das Client-Endgerät die Zahlungstransaktion vollzogen hat; Ausschalten der Nutzungserlaubnis des Ziel-Wartungsstandorts an das Client-Endgerät nach dem Empfangen von Auscheck-Informationen von dem Client-Endgerät.

6. Server für die Verwaltung von Wartungsstandorten nach Anspruch 6, wobei der Prozessor (200) beim Ausführen der im Speicher (100) gespeicherten Computerprogramme die folgenden Schritte ausführt: Empfangen einer durch das Client-Endgerät vorgelegten Reservierungsanforderung; Senden von Informationen über mindestens einen Wartungsstandort an das Client-Endgerät nach der Reservierungsanforderung, so dass ein Benutzer die Reservierungsinformationen gemäß den Informationen über den mindestens einen Wartungsstandort bestätigt.

7. Server für die Verwaltung von Wartungsstandorten nach Anspruch 6, wobei der Prozessor (200) beim Ausführen der im Speicher (100) gespeicherten Computerprogramme die folgenden Schritte ausführt: Bestimmen der Nutzungsanzahlung des Ziel-Wartungsstandorts gemäß den Reservierungsinformationen; Auslösen einer Anforderung für eine Zahlungstransaktion der Nutzungsanzahlung an das Client-Endgerät, um dem Client-Endgerät zu ermöglichen, eine Anzahlungstransaktion zu vollziehen; Zuweisen einer Reservierungsnutzungsqualifikation des Ziel-Wartungsstandorts an das Client-Endgerät, nachdem das Client-Endgerät die Anzahlungstransaktion vollzieht.

8. Server für die Verwaltung von Wartungsstandorten nach Anspruch 6, wobei der Prozessor (200) beim Ausführen der im Speicher (100) gespeicherten Computerprogramme die folgenden Schritte ausführt: Bestimmen, ob der Identitätsidentifikator des Client-Endgeräts in den Eincheck-Informationen mit demjenigen in den Reservierungsinformationen übereinstimmt, und/oder Bestimmen, ob der Identifikator der Ausrüstung in den Eincheck-Informationen mit dem Identifikator der Ausrüstung für die Wartung in den Reservierungsinformationen übereinstimmt; wenn er übereinstimmt, Bereitstellen einer Nutzungserlaubnis für den Ziel-Wartungsstandort an das Client-Endgerät.

9. Computerlesbares Speichermedium, wobei auf dem computerlesbaren Speichermedium Computerprogramme gespeichert sind, **dadurch gekennzeichnet, dass** die Computerprogramme, wenn sie von einem Prozessor ausgeführt werden, den Prozessor veranlassen, die Schritte des Verfahrens zur Verwaltung von Wartungsstandorten nach einem der Ansprüche 1-4 durchzuführen.

## Revendications

1. Procédé mis en œuvre par ordinateur destiné à la gestion de sites de maintenance comprenant les étapes suivantes :
la réception d'informations de réservation envoyées par un terminal client ; les informations de réservation comprenant au moins un site de maintenance cible et une durée d'utilisation cible ;
la réception d'informations d'enregistrement pendant la durée d'utilisation cible ;
la délivrance d'une autorisation d'utilisation du site de maintenance cible au terminal client en fonction des informations d'enregistrement ;
le procédé comprenant en outre :
la réception d'une demande de fin d'utilisation soumise par le terminal client, et l'obtention d'informations d'état actuel de tous les équipements sur le site de maintenance cible, les informations d'état actuel de tous les équipements comprenant au moins l'une des informations suivantes : que des valeurs paramétriques de tous les équipements sont comprises ou non dans une plage seuil normale, qu'un utilisateur a suivi ou non des règles d'utilisation des équipements, que des parties détachables des équipements sont remises en place ou non, que des parties mobiles des équipements se trouvent ou non à des emplacements dans leur état initial et qu'un degré global de nettoyage des équipements est conforme ou non à une norme ;
la détermination que l'état de fonctionnement de tous les équipements est normal lorsque les informations d'état actuel de tous les équipements sont positives, sinon la détermination que l'état de fonctionnement n'est pas normal ;
la génération d'une liste de services de maintenance et d'une liste de coûts en fonction du processus d'utilisation de l'utilisateur ;
la génération d'une liste de coûts supplémentaires basée sur le résultat de détermination que l'état de fonctionnement de tous les équipements est normal ou non, la liste de coûts supplémentaires étant vide si l'état de fonctionnement de tous les équipements est normal, sinon la liste de coûts supplémentaires correspondant à une compensation requise pour rétablir un équipement endommagé à son état normal ;
le lancement d'une demande de transaction de paiement, sur la base de la liste de services, de la liste de coûts et de la liste de coûts supplémentaires, auprès du terminal client, de telle sorte que le terminal client réalise la transaction de paiement ;
l'envoi d'informations de rappel de validation indiquant que l'utilisateur a été validé au terminal client, après que le terminal client a réalisé la transaction de paiement ;
la désactivation de l'autorisation d'utilisation du site de maintenance cible accordée au terminal client après la réception d'informations de validation à partir du terminal client.

2. Procédé de gestion de sites de maintenance selon la revendication 1, le procédé comprenant en outre, avant l'étape de réception d'informations de réservation envoyées par le terminal client :
la réception d'une demande de réservation soumise par le terminal client ;
l'envoi d'informations sur au moins un site de maintenance au terminal client en fonction de la demande de réservation, de telle sorte qu'un utilisateur confirme les informations de réservation en fonction des informations sur au moins un site de maintenance.

3. Procédé de gestion de sites de maintenance selon la revendication 1, le procédé comprenant en outre, après l'étape de réception d'informations de réservation envoyées par le terminal client :
la détermination d'un acompte d'utilisation du site de maintenance cible en fonction des informations de réservation ;
le lancement d'une demande de transaction de paiement de l'acompte d'utilisation auprès du terminal client, pour permettre au terminal client de réaliser une transaction de paiement d'acompte ;
l'attribution d'une qualification d'utilisation de réservation du site de maintenance cible au terminal client, après que le terminal client a réalisé la transaction de paiement d'acompte.

4. Procédé de gestion de sites de maintenance selon la revendication 1, dans lequel les informations de réservation comprennent en outre un identifiant d'identité de terminal client ou un identifiant d'un équipement à réparer ;
l'étape de délivrance d'une autorisation d'utilisation du site de maintenance cible au terminal client en fonction des informations d'enregistrement comprend notamment :
la détermination que l'identifiant d'identité du terminal client dans les informations d'enregistrement est cohérent ou non avec l'identifiant d'identité du terminal client dans les informations de réservation, et/ou la détermination que l'identifiant de l'équipement dans les informations d'enregistrement est cohérent ou non avec l'identifiant de l'équipement à entretenir dans les informations de réservation ;
s'il est cohérent, la délivrance de l'autorisation d'utilisation du site de maintenance cible au terminal client.

5. Serveur de gestion de sites de maintenance, **caractérisé en ce que** le serveur comprend :
une mémoire (100) qui stocke des programmes informatiques exécutables ;
un processeur (200) couplé à la mémoire (100) ;
lorsqu'il est utilisé pour exécuter les programmes d'ordinateur, le processeur (200) met en œuvre les étapes suivantes : réception d'informations de réservation envoyées par un terminal client ; les informations de réservation comprenant au moins un site de maintenance cible et une durée d'utilisation cible ; réception d'informations d'enregistrement pendant la durée d'utilisation cible ; délivrance d'une autorisation d'utilisation du site de maintenance cible au terminal client en fonction des informations d'enregistrement;
dans lequel, lorsqu'il exécute les programmes d'ordinateur stockés dans la mémoire (100), le processeur (200) met en œuvre les étapes suivantes : réception d'une demande de fin d'utilisation soumise par le terminal client, et l'obtention d'informations d'état actuel de tous les équipements sur le site de maintenance cible, les informations d'état actuel de tous les équipements comprenant au moins l'une des informations suivantes : que des valeurs paramétriques de tous les équipements sont comprises ou non dans une plage seuil normale, qu'un utilisateur a suivi ou non des règles d'utilisation des équipements, que des parties détachables des équipements sont remises en place ou non, que des parties mobiles des équipements se trouvent ou non à des emplacements dans leur état initial et qu'un degré global de nettoyage des équipements est conforme ou non à une norme ; la détermination que l'état de fonctionnement de tous les équipements est normal lorsque les informations d'état actuel de tous les équipements sont positives, sinon la détermination que l'état de fonctionnement n'est pas normal ; la génération d'une liste de services de maintenance et d'une liste de coûts en fonction du processus d'utilisation de l'utilisateur ; la génération d'une liste de coûts supplémentaires basée sur un résultat de détermination que l'état de fonctionnement de tous les équipements est normal ou non, la liste de coûts supplémentaires étant vide si l'état de fonctionnement de tous les équipements est normal, sinon la liste de coûts supplémentaires correspondant à une compensation requise pour rétablir un équipement endommagé à son état normal ; le lancement d'une demande de transaction de paiement, sur la base de la liste de services, de la liste de coûts et de la liste de coûts supplémentaires, auprès du terminal client, de telle sorte que le terminal client réalise la transaction de paiement ; l'envoi d'informations de rappel de validation indiquant que l'utilisateur a été validé au terminal client, après que le terminal client a réalisé la transaction de paiement ; la désactivation de l'autorisation d'utilisation du site de maintenance cible accordée au terminal client après réception d'informations de validation à partir du terminal client.

6. Serveur de gestion de sites de maintenance selon la revendication 6, dans lequel, lorsqu'il exécute des programmes d'ordinateur stockés dans la mémoire (100), le processeur (200) met en œuvre les étapes suivantes : réception d'une demande de réservation soumise par le terminal client ; envoi d'informations sur au moins un site de maintenance au terminal client en fonction de la demande de réservation de telle sorte qu'un utilisateur confirme les informations de réservation en fonction des informations sur l'au moins un site de maintenance.

7. Serveur de gestion de sites de maintenance selon la revendication 6, dans lequel, lorsqu'il exécute des programmes d'ordinateur stockés dans la mémoire (100), le processeur (200) met en œuvre les étapes suivantes : détermination d'un acompte d'utilisation du site de maintenance cible en fonction des informations de réservation ; lancement d'une demande de transaction de paiement d'acompte d'utilisation au terminal client, pour permettre au terminal client de réaliser une transaction de paiement d'acompte ; attribution d'une qualification d'utilisation de réservation du site de maintenance cible au terminal client après que le terminal client a réalisé la transaction de paiement d'acompte.

8. Serveur de gestion de sites de maintenance selon la revendication 6, dans lequel, lorsqu'il exécute des programmes d'ordinateur stockés dans la mémoire (100), le processeur (200) met en œuvre les étapes suivantes : détermination que l'identifiant d'identité du terminal client dans les informations d'enregistrement est cohérent ou non avec celui dans les informations de réservation, et/ou détermination que l'identifiant de l'équipement dans les informations d'enregistrement est cohérent ou non avec l'identifiant de l'équipement à entretenir dans les informations de réservation ; s'il est cohérent, délivrance d'une autorisation d'utilisation du site de maintenance cible au terminal client.

9. Support de stockage lisible par ordinateur, le support de stockage lisible par ordinateur stockant des programmes d'ordinateur, **caractérisé en ce que**, à leur exécution par un processeur, les programmes d'ordinateur amènent le processeur à mettre en œuvre les étapes du procédé de gestion de sites de maintenance selon l'une quelconque des revendications 1 à 4.
